# EUROPEAN PATENT APPLICATION

(11) **EP 4 768 754 A1**
(43) Date of publication of application: **01.07.2026**
(21) Application number: 24425067.6
(22) Date of filing: 31.12.2024
(51) Int. Cl.: F16H 57/01, F16H 57/04, F01M 1/10

(54) **SYSTEM AND METHOG FOR DETECTING ANOMALIES OF A TRANSMISSION ASSEMBLY OF AN AIRCRAFT**

(71) Applicant: Leonardo S.p.a., 00195 Roma (IT)
(72) Inventor: Scaltritti, Diego, 21017 SAMARATE (VA) (IT); Alari, Lorenzo, 21017 SAMARATE (VA) (IT); Pisani, Paolo, 21017 SAMARATE (VA) (IT); Sartori, Sergio, 21017 SAMARATE (VA) (IT)
(74) Representative: Studio Torta S.p.A.

(57) **Abstract**

A system (20) for detecting anomalies of a transmission assembly (8) of an aircraft (1). The aircraft (1) comprises a lubrication system (10), which comprises a tank (11) containing a lubricating fluid, a nozzle (12) configured to supply the lubricating fluid to the transmission assembly (8) and a fluid line (13), which fluidly connects the tank (11) to the nozzle (12). The detection system (20) comprises a first device (22), which detects a first quantity (n) associated with particles transported by the lubricating fluid along the fluid line (13), a second device (23), which detects a second quantity (ai) associated with vibrations of the transmission assembly (8) and an electronic control unit (24). The electronic control unit (24) verifies whether one between the first quantity (n) and the second quantity (ai) satisfies a first control criterion, whether the other between the first quantity (n) and the second quantity (ai) satisfies a second control criterion when the first control criterion is not satisfied and determines the presence of a possible anomaly of the transmission assembly (8) and/or provides for corrective actions when neither control criteria are satisfied.

## Description

The present invention relates to a system and to a method for detecting anomalies of a transmission assembly of an aircraft, in particular capable of hovering.

Aircraft that are capable of hovering are known, essentially comprising a fuselage, a main rotor positioned at the top of the fuselage and rotatable about an axis of its own, and an anti-torque rotor arranged at a tail end of the fuselage.

These aircraft comprise, in a known way, also one or more motor members, for example turbines, and a transmission assembly interposed between the turbines and the main rotor and adapted to transmit motion from the turbines to the main rotor.

Aircraft can further comprise other transmission assemblies, which are adapted to transmit motion from the turbines to a plurality of accessory devices responsible, for example, for supplying the energy required to operate on-board equipment.

During operation of aircraft, it is essential to ensure correct lubrication of the transmission assembly, as conditions of inadequate lubrication could be critical for the whole aircraft. To this end, aircraft comprise a circuit for lubrication of the members of the transmission assembly, which essentially comprises:
- a tank adapted to contain a lubricating fluid;
- a plurality of nozzles, each configured to supply the lubricating fluid to a respective portion of the transmission assembly; and
- a fluid line, which fluidly connects the tank to the nozzles.

In general, it is known that in case of wear of the members of the transmission assembly, inefficient lubrication or malfunctioning, some fragments of the aforesaid members tend to detach and disperse in the lubricating oil. In light of this phenomenon, a device known as chip detector has been developed to allow monitoring of the operation of the transmission assembly, detecting the presence of any particles in the lubricating fluid.

In particular, the particle detection device is arranged at the fluid line and is crossed by the flow of lubricating fluid being conveyed to the nozzles, at which it carries out detections.

Specifically, chip detectors of magnetic type comprising a first magnet and a second magnet are known. These first and second magnets are spaced from one another and the lubricating fluid is conveyed between them. Chip detectors further comprise an electrical circuit, of which the first magnet and the second magnet form respective electrical terminals.

Due to the space interposed between the first magnet and the second magnet, at least in an initial operating phase of the chip detectors, the electrical circuit is open and the passage of current between the first and the second magnet is prevented.

During operation of the lubrication circuit, any ferromagnetic particles transported by the fluid are captured by the first or by the second magnet, accumulating in the space between the first and the second magnet and progressively decreasing the distance between them.

Once the space between the first and the second magnet has been filled by the captured ferromagnetic particles, a condition of electrical continuity between the first magnet and the second magnet is established, the electrical circuit is closed and the passage of current is thus permitted.

At this point, an alarm message is generated, advising the pilot to land promptly, to limit risks for the safety of the aircraft and allow maintenance and inspection operations to be carried out.

This strategy of monitoring the transmission assembly of aircraft leaves room for improvements.

In fact, the operating principle of chip detectors described above and their activation threshold allows particles to be detected when they are already present in the flow of lubricating fluid in a considerable amount. Therefore, when chip detectors are activated, it is generally necessary to abort the mission.

Furthermore, magnetic chip detectors are unable to detect fragments of non-ferromagnetic materials dispersed in the lubricating oil. Nonetheless, some components of the transmission assembly (such as the bearings) could comprise portions made of non-ferromagnetic material.

There is therefore the need in the art to pinpoint a strategy for detecting anomalies of the transmission assembly that does not suffer from the drawbacks of prior art devices.

An object of the invention is to answer the aforesaid need, preferably in a simple and inexpensive way.

The aforesaid object is achieved by the present invention, as it relates to a system for detecting anomalies of a transmission assembly of an aircraft, as defined in claim 1.

The aforesaid object is also achieved by a method for detecting anomalies of a transmission assembly of an aircraft, as defined in claim 12.

For a better understanding of the present invention, a preferred embodiment is described below, purely by way of non-limiting example and with reference to the accompanying drawings, wherein:
- Fig. 1 is a lateral view of a helicopter according to the present invention;
- Fig. 2 is a diagram of a lubrication system of the helicopter of Fig. 1; and
- Fig. 3 is a block diagram relating to a method for detecting anomalies of a transmission assembly of the helicopter of Fig. 1.

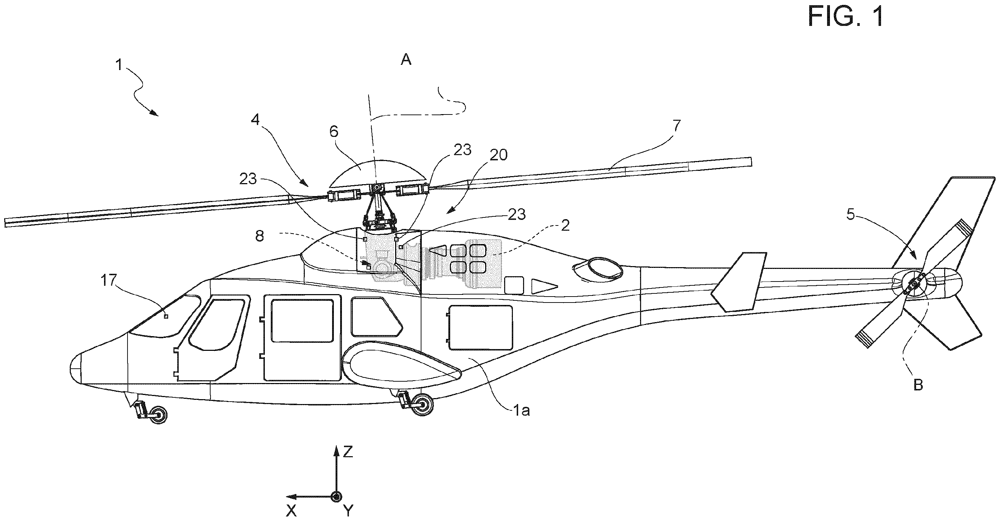

With reference to Fig. 1, the reference number 1 indicates an aircraft capable of hovering. In the non-limiting embodiment shown, the aircraft is a helicopter.

Hereinafter in the present description, expressions such as "front" "rear", "upper" and "lower" are used with reference to a normal direction of forward flight and a normal operating position of the helicopter 1 illustrated in the accompanying figures. It is also possible to define a reference system integral with the helicopter 1 and comprising (Fig. 1):
- a longitudinal axis X;
- a transverse axis Y, which is orthogonal to the axis X; and
- an axis Z orthogonal to the axes X and Y and directed vertically to the ground during a normal condition of use of the helicopter 1.

The aircraft 1 comprises:
- a fuselage 1a;
- one or more turbines 2;
- a main rotor 4 placed at the top of the fuselage 2 and rotatable about an axis A; and
- an anti-torque rotor 5 placed at a tail end of the fuselage 2 and rotatable about an axis B of its own transverse to the axis A.

The rotor 4 comprises, in turn:
- a drive shaft - not illustrated - rotatable about the axis A;
- a hub 6 driven in rotation by the drive shaft; and
- a plurality of blades 7 linked on the hub 6 and extending radially to the axis A.

The helicopter 1 further comprises a transmission assembly 8, which transmits motion from the turbines 2 to the main rotor 4.

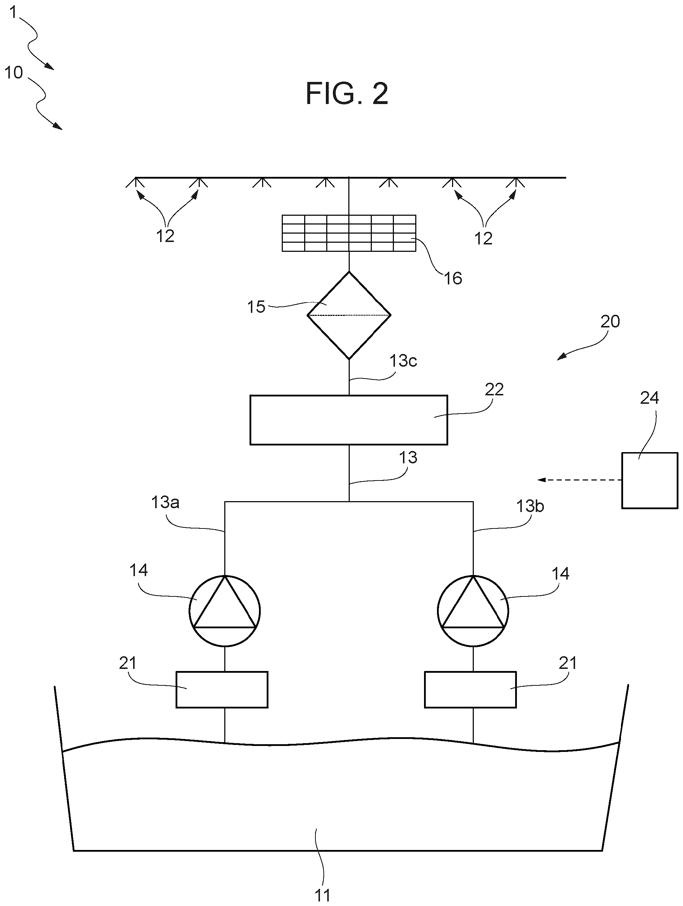

The helicopter 1 further comprises a lubrication system 10 for lubricating the transmission assembly 8, which comprises (Fig. 2) :
- a tank 11 adapted to contain a lubricating fluid, for example oil;
- a plurality of nozzles 12 to supply the lubricating fluid to respective portions of the transmission assembly 8; and
- a fluid line 13, which fluidly connects the tank 11 to the nozzles 12.

The tank 11 is also adapted to contain and collect the lubricating fluid, after it has lubricated the components of the transmission assembly 8.

The lubrication system 10 further comprises (Fig. 2):
- two pumps 14 configured to suck the lubricating fluid contained in the tank 11 and send it to the nozzles 12;
- a filter 15 configured to retain particles, debris and any other impurities transported by the lubricating fluid directed towards the nozzles 12; and
- a heat exchanger 16 configured to lower the temperature of the lubricating fluid directed towards the nozzles 12.

In detail, the fluid line 13 comprises:
- a stretch 13a, at which one of the two pumps 14 is arranged;
- a stretch 13b, at which the other of the two pumps 14 is arranged; and
- a stretch 13c, which extends from the stretches 13a and 13b to the nozzles 12.

In other words, the two pumps 14 are arranged in parallel.

In further detail, considering the direction of the flow of lubricating fluid directed towards the nozzles 12 along the fluid line 13, the stretch 13c is arranged downstream of the pumps 14.

The filter 15 and the heat exchanger 16 are arranged at the stretch 13c. In particular, the filter 15 and the heat exchanger 16 are arranged one after the other considering the direction of the lubricating fluid along the fluid line 13.

The aircraft 1 further comprises:
- signalling means 17 (illustrated only schematically in Fig. 1) configured to emit a signal relating to the presence of anomalies of the transmission assembly 8 and/or an emergency signal; and
- a system 20 for detecting anomalies of the transmission assembly 8.

The term anomaly is meant as any phenomenon of alteration of the operation of the transmission assembly 8 and of its components (wear, insufficient lubrication, scratched or chipped bearings, etc.).

In detail, the signalling means 17 comprise acoustic and/or visual signalling devices. For example, the signal emitted by the signalling means 17 has the purpose of urging the pilot of the helicopter 1 to land promptly.

The system 20 comprises, in turn (Fig. 2):
- two devices 21 configured to generate a signal relating to the presence of particles in the lubricating fluid; and
- an electronic control unit 24 operatively connected to the devices 21 and configured to command the signalling means 17 to emit its signal when the devices 21 generate the signal relating to the presence of particles in the lubricating fluid.

Hereinafter in the present description, the term "particles" is used to indicate foreign bodies in the lubricating fluid, which pollute it and which are transported by it. In particular, the particles are fragments, granules, debris, flakes or chips of components of the transmission assembly 8 and/or of objects that are foreign to the helicopter 1 (i.e., Foreign Object Debris, or FOD).

In detail, the devices 21 are configured to detect the presence of any ferromagnetic particles in the lubricating fluid. In further detail, each device 21 comprises a respective magnetic chip detector.

The devices 21 are configured to capture ferromagnetic particles and to generate the signal relating to the presence of particles in the lubricating fluid when:
- the particles captured are of small size but their quantity is greater than a critical value (for example, three);
- the quantity of the particles captured is smaller than the critical value (for example, only one particle has been captured), but the particles captured are of large size.

In further detail, particles of small size are meant as particles that have sizes (for example, diameter or equivalent diameter) smaller than a first size threshold value; particles of large size are meant as particles that have sizes greater than the first size threshold value.

In further detail, preferably, the particles of small size have sizes greater than a second size threshold value, which is smaller than the first size threshold value. For this reason, the devices 21 act as respective low-band filters for the particles dispersed in the flow of lubricating fluid.

The chip detector of each device 21 is known per se and shall not be described in detail below for the sake of brevity.

Preferably, the chip detector of each device 21 essentially comprises a first magnet and a second magnet spaced away from one another and between which the lubricating fluid is conveyed. The chip detector further comprises an electrical circuit, the first magnet and the second magnet of which form respective electrical terminals. Due to the space interposed between the first magnet and the second magnet, at least in an initial operating step of the chip detector, the electrical circuit is open and passage of current between the first and the second magnet is prevented.

Also in a known way, the chip detector is configured to:
- send a current pulse along the electrical circuit when it captures a particle;
- detect the presence of a particle of small size when the electrical circuit remains open after sending the current pulse;
- detect the presence of a particle of large size when the electrical circuit is closed after sending the current pulse.

In detail, when the current pulse reaches the particles of small size, it causes their at least partial combustion and/or atomization.

Preferably, the devices 21 are configured to detect one or more of the following properties of the particles:
- size;
- number;
- shape.

As schematically illustrated in Fig. 2, one of the two devices 21 is arranged at the stretch 13a and the other of the two devices 21 is arranged at the stretch 13b. Moreover, each device 21 is positioned upstream of the respective pump 14 considering the direction of flow of the lubricating fluid directed to the nozzles 12 along the fluid line 13.

Preferably, the devices 21 are identical to one another.

Advantageously, the monitoring system 20 comprises:
- a device 22 configured to detect a first quantity n associated with particles transported by the flow of lubricating fluid along the fluid line 13;
- a plurality of accelerometers 23 configured to detect respective second quantities a1, a2, ... ai associated with vibrations of the transmission assembly 8;
the electronic control unit 24 is also operatively connected to the device 22 and to the accelerometers 23 and is configured to:
- verify whether the first quantity n satisfies a first control criterion;
- verify whether the second quantities ai satisfy a second control criterion when the first control criterion is not satisfied; and
- determine the presence or the probable presence of an anomaly in the transmission assembly 8 and/or provide for corrective actions when neither the first control criterion nor the second control criterion is satisfied.

By way of example, the corrective actions include scheduling extraordinary maintenance operations. Alternatively, or additionally, the electronic control unit 24 is configured to store information relating to the presence or to the probable presence of an anomaly in the transmission assembly 8.

In detail, the first quantity n is a number of particles transported by the flow of lubricating fluid and the device 22, illustrated only schematically in Fig. 2, comprises a sensor configured to detect this number of particles transported by the flow of lubricating fluid along the fluid line 13.

Preferably, the aforesaid sensor is configured to detect the number of both ferromagnetic and non-ferromagnetic particles transported.

Moreover, preferably, but not necessarily, the sensor of the device 22 is configured to classify the type of material of the particles (by way of example, it is configured to distinguish between steel, aluminium and ceramic material).

In further detail, the first quantity n is a number of particles transported by the flow of lubricating fluid and progressively detected during a time interval starting from an initial time instant t₀. For example, the initial time instant t₀ coincides with start of a mission or with the moment in which the turbines 2 are switched on.

Specifically, the sensor of the device 22 is of acoustic and/or optical type. For example, the sensor of the device 22 is an Advanced Debris Monitoring (ADM) sensor. Nevertheless, the sensor of the device 22 could operate according to an operating technology different from acoustic and/or optical type.

By way of non-limiting example, the device 22 is implemented as described in EP3715830 and/or in US20150338318.

In the embodiment illustrated in Fig. 2, the device 22 is arranged at the fluid line 13. In detail, the device 22 is arranged at the stretch 13c. In further detail, the device 22 is arranged upstream of the filter 15, considering the direction of flow of lubricating fluid along the fluid line 13.

The accelerometers 23, some of which are illustrated only schematically in Fig. 1, are configured to cooperate with different portions of the transmission assembly 8.

In detail, the accelerometers 23 are configured to detect the respective second quantities ai at different components (for example, shafts, gears, bearings, casings, etc.) of the transmission assembly 8. To this end, the accelerometers 23 are variously distributed along the transmission assembly 8. In further detail, the second quantities ai are acceleration values measured at or in proximity to the components of the transmission assembly 8 with which the accelerometers 23 cooperate.

The first control criterion establishes that the first quantity n is smaller than a first threshold value ne. In detail, the first threshold value n_{θ} is a threshold number of particles.

In further detail, the electronic control unit 24 is configured to store the first threshold value ne and to determine that the first quantity n does not satisfy the first control criterion when it is greater than the first threshold value n_{θ}.

Similarly, the second control criterion establishes that each second quantity ai measured by the accelerometers 23 is smaller than respective second threshold values aei. In general, the second threshold values aei are different from one another. In detail, the second threshold values a_{θi} are acceleration threshold values.

In further detail, the electronic control unit 24 is configured to store the second threshold values aei and to determine that the second quantities ai do not satisfy the second control criterion when at least some of the second quantities ai are greater than the respective second threshold values aei.

At least some of the accelerometers 23 are configured to cooperate with components of the transmission assembly 8 that are lubricated by the lubrication system 10, i.e., which are affected and/or impacted by the flow of lubricating fluid emitted by the nozzles 12. Moreover, one or more of the accelerometers 23 could be configured to cooperate with components (for example, one or more fans) of the transmission assembly 8 that are not lubricated by the lubrication system 10.

Therefore, specifically, when the second control criterion is not verified, the electronic control unit 24 is configured to verify whether or not at least one second quantity ai that was greater than the respective second threshold value aei has been detected by an accelerometer 23 configured to cooperate with components of the transmission assembly 8 lubricated by the lubrication system 10.

Preferably, the electronic control unit 24 is configured to determine the presence or the probable presence of an anomaly in the transmission assembly 8 and/or provide for corrective actions when neither the first control criterion nor the second control criterion is satisfied and at least one second quantity ai that was greater than the respective second threshold value has been detected by an accelerometer 23 that cooperates with components of the transmission assembly 8 lubricated by the lubrication system 10.

The electronic control unit 24 is further configured to carry out a method for detecting anomalies of the transmission assembly 8 based on the second quantities ai when the second quantities ai that are greater than the respective second threshold values aei have been detected only by accelerometers 23 configured to cooperate with components of the transmission assembly 8 not lubricated by the lubrication system 10. In detail, the electronic control unit 24 is configured to carry out the aforesaid method for detecting anomalies of the transmission assembly 8 based on the second quantities ai and not based also on the first quantities.

Preferably, the aforesaid method for detecting anomalies of the transmission assembly 8 based on the second quantities ai is the one described in the European patent EP4091945 by the same applicant, granted on 06.09.2023 based on an application filed on 23.11.2022, the content of which is fully incorporated herein by reference.

The electronic control unit 24 is also configured not to determine the presence or the imminent occurrence of an anomaly in the transmission assembly 8 and/or not to provide for corrective actions when both the first criterion and the second control criterion are satisfied.

The electronic control unit 24 is also configured to change the first threshold value n_{θ} when the first control criterion is not satisfied and the second control criterion is instead satisfied. In detail, in this case, the electronic control unit 24 is configured to increment the first threshold value ne.

For example, the electronic control unit 24 is configured to change the first threshold value ne by means of mathematical and/or statistical methods.

In further detail, the electronic control unit 24 is configured to store the increased first threshold value ne.

Preferably, the electronic control unit 24 is further configured to:
- process the first quantity n detected by the devices 22 and/or the second quantities ai detected by the accelerometers 23 to classify them in one or more classes; and
- determine the presence or the imminent occurrence of an anomaly in the transmission assembly 8 and/or provide for corrective actions not only when neither the first control criterion nor the second control criterion is satisfied, but also based on the classification of the first quantity n and/or of the second quantities ai in the one or more classes.

By way of example, the classes comprise:
- a first class, which is indicative of the presence or of the imminent occurrence of an anomaly in the transmission assembly 8; and
- a second class, which is indicative of the absence of an anomaly or of the improbable occurrence of an anomaly in the transmission assembly 8.

In detail, the electronic control unit 24 is configured to determine the presence or the imminent occurrence of an anomaly in the transmission assembly 8 and/or provide for corrective actions when neither the first control criterion nor the second control criterion is satisfied and when the first quantity n and/or the second quantities ai detected are classified in the first class.

The electronic control unit 24 is configured to classify the first quantity n and/or the second quantities ai by means of a classification model. In particular, this classification model is determined and applied by a machine learning algorithm loaded and executable by the electronic control unit 24. Preferably, the machine learning algorithm is of proprietary type.

In use, the transmission assembly 8 transmits the motion from the turbines 2 to the main rotor 4, causing its rotation about the axis A, and the lubrication system 10 lubricates at least some of the components of the transmission assembly 8.

In detail, the pumps 14 suck the lubricating fluid contained in the tank 11 and convey it along the fluid line 13 towards the nozzles 12. Simultaneously, the devices 21 progressively capture the ferromagnetic particles dispersed in the flow of lubricating fluid.

When one of the devices 21 captures particles of small size and in a number greater than the critical value or particles of large size, even if in a number smaller than the critical value, it generates the signal relating to the presence of particles in the lubricating fluid. The electronic control unit 24 receives the aforesaid signal from the device 21 and commands the signalling means 17 to emit its signal.

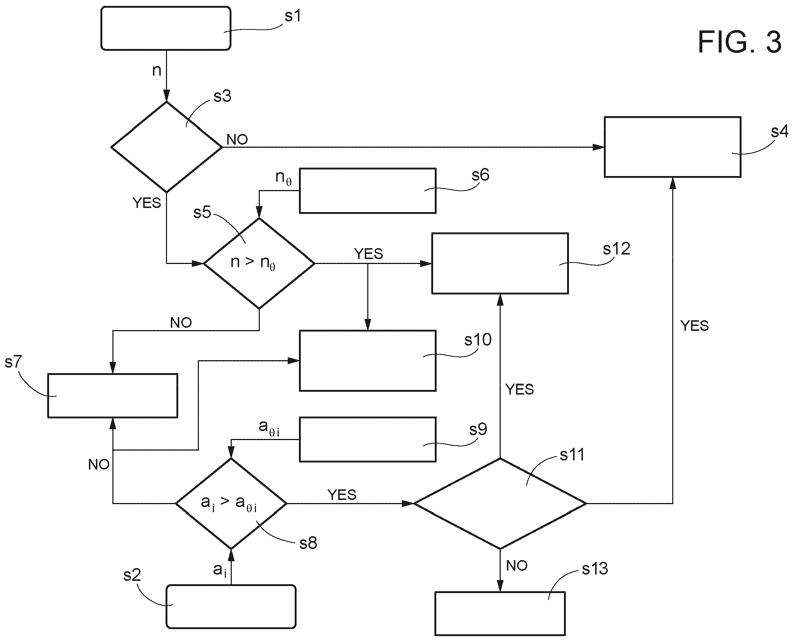

Moreover, during operation of the transmission assembly 3, the device 22 detects the first quantity n (see block s1 in Fig. 3) and the accelerometers 23 arranged along the transmission assembly 8 detect the second quantities ai (see block s2 in Fig. 3).

The electronic control unit 24 firstly evaluates whether the device 22 has detected at least one particle dispersed in the lubricating fluid (see block s3 in Fig. 3).

In particular, if the device 22 has not detected any particle, the electronic control unit 24 determines that an anomaly of the transmission assembly 8 is not present or not probable and/or does not provide for any corrective actions (see block s4 in Fig. 3). Instead, if the device 22 has detected one or more particles, the electronic control unit 24 verifies whether the first quantity n satisfies the first control criterion (see block s5 in Fig. 3).

In detail, in order to verify whether the first quantity n satisfies the first control criterion, the electronic control unit 24 accesses its memory to extract the first threshold value n_{θ} stored therein (see block s6 in Fig. 3) and verifies that the number of particles detected by the device 22 is smaller than the first threshold value n_{θ}.

If the first control criterion is satisfied, the electronic control unit 24 determines that an anomaly of the transmission assembly 8 is not present or not probable and/or does not provide for corrective actions (see block s7 in Fig. 3) . Instead, if the first control criterion is not satisfied, the electronic control unit 25 evaluates whether or not the second control criterion is also satisfied (see block s8 in Fig. 3).

To this end, the electronic control unit 24 accesses its memory to extract the second threshold values aei stored therein (see block s9 in Fig. 3) and compares the second quantities ai detected by the accelerometers 23 with the respective second threshold values aei.

In detail, if the second quantities ai detected by all the accelerometers 23 are smaller than the respective second threshold values aei, the second control criterion is undoubtedly satisfied. Consequently, although the first control criterion is not satisfied, the electronic control unit 24 determines that an anomaly of the transmission assembly 8 is not present or not probable (see block s10 in Fig. 3).

Instead, if at least one of the second quantities ai detected is greater than the respective second threshold value aei, the electronic control unit 24 verifies whether or not this at least one second quantity ai has been detected by an accelerometer 23 that cooperates with one or more components of the transmission assembly 8 that are lubricated by the lubrication system 10 (see block s11 in Fig. 3).

If this at least one second quantity ai has been detected by an accelerometer 23 that cooperates with one or more components of the transmission assembly 8 that are not lubricated by the lubrication system 10, the electronic control unit 24 carries out the method for detecting anomalies of the transmission assembly 8 based on the second quantities ai (see block s13 in Fig. 3, for example based on the description provided in EP4091945).

Vice versa, if this at least one second quantity ai has been detected by an accelerometer 23 that cooperates with one or more components of the transmission assembly 8 that are lubricated by the lubrication system 10, the first quantity n and/or the second quantities ai are classified by means of the classification model (see block s12 in Fig. 3).

In detail, if the first quantity n and/or the second quantities ai detected are entered in the first class, which is indicative of the presence or of the imminent occurrence of an anomaly in the transmission assembly 8, the electronic control unit 24 determines the presence or the probable presence of an anomaly in the transmission assembly 8 and/or provides for corrective actions. Instead, if the first quantity n and/or the second quantities ai detected are entered in the second class, which is indicative of the absence of an anomaly or of the improbable occurrence of an anomaly in the transmission assembly 8, the electronic control unit 24 determines the absence or the improbable presence of an anomaly in the transmission assembly 8 and/or does not provide for corrective actions.

In particular, the classification model is obtained by training the machine learning algorithm by means of training data.

The training data comprise a series of values of the first quantity n and of the second quantities ai to which anomalies of the transmission assembly 8 do or do not correspond. Moreover, each training datum is associated with a respective label, which is representative of the presence or of the absence of anomalies of the transmission assembly 8.

The training data comprise values determined or detected by means of experimentation, simulation and/or obtained from flight data.

For example, the machine learning algorithm is trained by:
- supplying part of the training data available and the related labels to the machine learning algorithm, so that it classifies each training information and determines a classification model;
- supplying the remaining part of the available training data without the related labels to the machine learning algorithm;
- classifying this remaining part of the training data by means of the classification model;
- evaluating the accuracy of the classification model determined based on the classification performed by the algorithm and on the labels associated with the remaining part of the training data; and
- improving, if necessary, the classification model based on the accuracy calculated, i.e., re-training the classification model based on the accuracy calculated.

In detail, the training data comprise a series of values determined or detected by means of experimentation, simulation and/or obtained from flight data. Each series of values relating to the same experiment, to the same simulation or to the same flight comprises:
- a plurality of values n(ti) of the first quantity n relating to respective different instants of time ti starting from an initial time instant t₀;
- a plurality of values ai(ti) of the second quantities ai relating to respective different instants of time starting from the initial time instant t₀;
- the time instant T at which the device 21, during the experimentation, simulation or flight during which the series of values was obtained, generated/would have generated the signal relating to the presence of particles in the lubricating fluid measured from the initial time instant t₀ and/or the signalling means 17 emitted/would have emitted their signal.

Moreover, one or more pairs of values n(ti), ai (ti) of each series of values is associated with a respective label, which is representative of the presence or of the absence of anomalies of the transmission assembly 8.

The label associated with a generic time instant ti is determined as a function of:
- the values n(ti), ai(ti) at the time instant tᵢ;
- the time interval between the time instant ti and the time instant T.

In further detail, a pair of values n(ti), ai(ti) at a generic time instant ti is associated with a label representative of the presence of anomalies of the transmission assembly 8 when the time interval between the time instant ti and the time instant T is smaller than a duration threshold value; vice versa, a pair of values n(ti), aᵢ(tᵢ) at a generic time instant ti is associated with a label representative of the absence or of the improbable presence of anomalies of the transmission assembly 8 when the time interval between the time instant ti and the time instant T is greater than a duration threshold value.

After having obtained the classification model, this can be used to classify the detected values of the first quantity n and/or of the second quantities ai (not labelled), in order to evaluate the presence of anomalies of the transmission assembly 8.

Specifically, the classification model receives as input the detected values of the first quantity n and/or of the second quantities ai and determines a time interval within which it is probable that one of the devices 21 will generate the signal relating to the presence of particles in the lubricating fluid. If this time interval is smaller than the duration threshold value, the generation of the signal relating to the presence of particles in the lubricating fluid by one of the devices 21 or by both the devices 21 is imminent and hence the detected values of the first quantity n and/or of the second quantities ai are classified in the first class; instead, if this time interval is greater than the duration threshold value, the generation of the signal relating to the presence of the particles in the lubricating fluid by the device 21 is far off in time and hence the detected values of the first quantity n and/or of the second quantities ai are classified in the second class.

Preferably, moreover, the classification model provides as output the time interval within which it is probable that the device 21 will generate the signal relating to the presence of particles in the lubricating fluid.

Alternatively, or additionally, the classification model is configured to classify the detected values of the first quantity n and/or of the second quantities ai not only in the first class or in the second class, but also in further classes, each of which is associated with a respective different value of risk of an anomaly occurring in the transmission assembly 8.

For example, the classes comprise:
- the aforesaid first class, with which a maximum risk of the presence of an anomaly in the transmission assembly 8 is associated;
- the aforesaid second class, with which a minimum risk of the presence of an anomaly in the transmission assembly 8 is associated; and
- a third class, with which an intermediate risk of the presence of an anomaly in the transmission assembly 8 is associated.

The classification model classifies the detected values of the first quantity n and/or of the second quantities ai:
- in the first class, when the time interval within which it is probable that the device 21 or the devices 21 will generate the signal relating to the presence of particles in the lubricating fluid is smaller than a first duration threshold value;
- in the second class, when the time interval within which it is probable that the device 21 or the devices 21 will generate the signal relating to the presence of particles in the lubricating fluid is greater than a second duration threshold value; wherein the second duration threshold value is greater than the first duration threshold value;
- in the third class, when the time interval within which it is probable that the device 21 or the devices will generate the signal relating to the presence of particles in the lubricating fluid is greater than the first duration threshold value and smaller than the second duration threshold value.

Therefore, in order to train the machine learning algorithm, the label associated with each pair of values n(ti), ai(ti) of the training data at a generic time instant ti is representative of the risk of the presence of an anomaly in the transmission assembly 8 based on the time interval between the time instant ti and the time instant T.

When the detected values of the first quantity n and/or of the second quantities ai are classified in the third class, the electronic control unit 24 preferably determines the presence of an anomaly in the transmission assembly 8 with which a probability value is associated (smaller than the value that would be obtained if the detected values of the first quantity n and/or of the second quantities ai were classified in the first class, but greater than the value that would be obtained if the detected values of the first quantity n and/or of the second quantities ai were classified in the second class) and/or provides for corrective actions (for example, different to those that it would provide for if the detected values of the first quantity n and/or of the second quantities ai were classified in the first class).

Finally, when the first control criterion is satisfied and at least one second quantity ai greater than the respective second threshold value aei has been detected by an accelerometer 23 that cooperates with one or more components of the transmission assembly 8 that have been lubricated by the lubrication system 10, the electronic control unit 24 determines that an anomaly of the transmission assembly 8 is not present or not probable and/or does not provide for corrective actions (see block s4 in Fig. 3).

From examination of the detection system 20 and of the detection method according to the dictates of the present invention, the advantages that can be obtained therewith are evident.

In particular, since the electronic control unit 24 determines the presence of a possible anomaly of the transmission assembly 8 and/or provides for corrective actions when neither the first criterion nor the second control criterion is satisfied, it is possible to detect the occurrence of possible anomalies of the transmission assembly promptly and independently from the detections carried out by the devices 21.

Specifically, the determination carried out by the electronic control unit 24 allows corrective manoeuvres to be implemented before activation of the devices 21. Consequently, it is possible to limit the risk of having to resort to emergency manoeuvres due to generation of the signal relating to the presence of the particles in the lubricating fluid by the devices 21.

Moreover, the strategy for detecting anomalies of the present invention operates simultaneously on two different fronts. In fact, the data obtained by detection of particles on the one hand, and those obtained by detection of vibrations on the other, validate each other. In this way, it is possible to limit the risks of the presence of anomalies in the transmission assembly 8 being erroneously determined (for example, due to phenomena of noise).

Since the electronic control unit 24 is configured to change the first threshold value n_{θ} when the first control criterion is not satisfied and said second control criterion is satisfied, it is possible recalibrate the first control criterion when the first threshold value n_{θ} initially set is too pessimistic.

Moreover, the electronic control unit 24 is preferably configured to determine the occurrence of an anomaly of the transmission assembly 8 and/or provide for corrective actions not only when neither the first control criterion nor the second control criterion is satisfied, but also based on the classification of the first quantity n and/or of the second quantities ai in the one or more classes. This classification takes place by means of a machine learning algorithm, taking account of training data collected from simulations, experimentations or flight data. In this way, it is possible to obtain further confirmation of the effective risk of damage of the transmission assembly 8.

Since the detection system 20 also comprises the devices 21, i.e., the chip detectors, it is possible to detect any anomalies of the transmission assembly 8 with particular robustness. Specifically, detection of the particles by means of the devices 21 constitutes a second additional level of detection with respect to that governed by the devices 22 and by the accelerometers 23.

Since the device 22 is configured to detect the number n of diamagnetic, paramagnetic or ferromagnetic particles transported by the lubricating fluid along the fluid line 13, it is also possible to detect particles detached from components made of non-metallic materials of the transmission assembly 8.

Finally, it is clear that changes and variations can be made to detection system 20 and to the detection method described and illustrated herein without departing from the scope of protection defined by the claims.

In particular, the detection system 20 could be configured to detect anomalies not only of the transmission assembly 8, but also of further transmissions assemblies of the helicopter 1. For example, the detection system 20 could be configured to detect anomalies of a transmission assembly adapted to transmit motion from the turbines 2 to the anti-torque rotor 5. Alternatively or additionally, the detection system 20 could be configured to detect anomalies of transmission assemblies adapted to transmit motion from the turbines 2 to a plurality of accessory devices of the helicopter 1 responsible, for example, for supplying the energy required to operate on-board equipment.

The electronic control unit 24 could be configured to firstly verify whether the second quantities ai satisfy the second control criterion and to then verify whether the first quantity n satisfies the first control criterion when the second control criterion is not satisfied.

The first quantity n could be a number of particles transported by the flow of lubricating fluid along the fluid line 13 per unit of time. In this case, the first control criterion would establish that the first quantity n is smaller than a first threshold value n_{θ}, in which the first threshold value n_{θ} is a threshold number of particles per unit of time.

Alternatively or additionally, the first quantity n could be a number of particles transported by the flow of lubricating fluid along the fluid line 13 and having a size greater than a size threshold value.

The aircraft 1 might not be a helicopter, but another aircraft capable of hovering, for example a convertiplane, an airship or a STOVL (Short Take-Off and Vertical Landing) aircraft.

The lubrication system 10 could comprise only one pump 14 instead of two pumps 14, or more than two pumps 14.

The detection system 20 could comprise only one device 21 or more than two devices 21. Similarly, the detection system 20 could comprise more than one device 22.

The devices 21 and/or the devices 22 could be differently arranged along the lubrication system 10. In detail, the detection system 20 could comprise a device 22 at the stretch 13a and/or a device 22 at the stretch 13b. In further detail, the device 22 arranged at the stretch 13a could be positioned downstream of the related device 21 considering the direction of flow of lubricating fluid along the fluid line 13. Similarly, the device 22 arranged at the stretch 13b could be positioned downstream of the related device 21 considering the direction of flow of lubricating fluid along the fluid line 13.

The device 21 and the device 22 could be integrated with each other, forming a single device.

The filter 15 could be integrated with the device 21 and/or the device 22, forming a single device.

Although the specific case in which the classes comprise only the first class, the second class and the third class has been described, the classification method could be based on a greater number of classes, each of which is associated with a respective different value of risk of an anomaly occurring in the transmission assembly 8.

Moreover, the electronic control unit 24 could be configured to compare with the respective second threshold values aei only the second quantities ai detected by accelerometers 23 configured to cooperate with components of the transmission assembly 8 that are lubricated by the lubrication system 10. In other words, the electronic control unit 24 could be configured to exclude the second quantities ai detected by accelerometers 23 configured to cooperate with components of the transmission assembly 8 that are not lubricated by the lubrication system 10 from the evaluation of the second control criterion.

The electronic control unit 24 could be configured to change the second threshold values aei when the second control criterion is not satisfied and the first control criterion is instead satisfied. In detail, in this case, the electronic control unit 24 is configured to increase the second threshold values aei.

For example, the electronic control unit 24 is configured to change the second threshold values aei by means of mathematical and/or statistical methods.

In further detail, the electronic control unit 24 is configured to store the increased second threshold values aei.

This allows recalibration of the second control criterion when the second threshold values aei initially set are too pessimistic.

## Claims

1. A system (20) for detecting anomalies of a transmission assembly (8) of an aircraft (1) capable of hovering; said aircraft (1) comprising a lubrication system (10), in turn comprising:
- a tank (11) adapted to contain, in use, a lubricating fluid;
- at least one nozzle (12) configured to supply said lubricating fluid to a portion of said transmission assembly (8); and
- a fluid line (13), which fluidly connects said tank (11) to said nozzle (12);
said detection system (20) being **characterized in that** it comprises:
- at least one first device (22) configured to detect a first quantity (n) associated with particles transported, in use, by said lubricating fluid along said fluid line (13);
- at least one second device (23) configured to detect a second quantity (ai) associated with vibrations of said transmission assembly (8); and
- an electronic control unit (24) operatively connected to said first device (22) and to said second device (23);
said electronic control unit (24) being configured to:
- verify whether one between said first quantity (n) and said second quantity (ai) satisfies a first control criterion;
- verify whether the other between said first quantity (n) and said second quantity (ai) satisfies a second control criterion when the first control criterion is not satisfied;
- determine the presence or the probable presence of an anomaly in the transmission assembly (8) and/or provide for corrective actions when neither the first control criterion nor the second control criterion is satisfied.

2. The detection system according to claim 1, wherein said first control criterion establishes that one between said first quantity (n) and said second quantity (ai) is compared with a first threshold value (n_{θ}; a_{θi});
said electronic control unit (24) being configured to change said first threshold value (n_{θ}; a_{θi}) when said first control criterion is not satisfied and said second control criterion is satisfied; and/or
wherein said second control criterion establishes that the other between said first quantity (n) and said second quantity (ai) is compared with a second threshold value (aei; ne);
said electronic control unit (24) being configured to change said second threshold value (a_{θi}; n_{θ}) when said second control criterion is not satisfied and said first control criterion is satisfied.

3. The detection system according to claim 1 or 2, comprising:
- at least one said second device (23) configured to cooperate with one or more components of said transmission assembly (8) that are lubricated, in use, by said lubrication system (10);
- at least one further said second device (23) configured to cooperate with one or more components of said transmission assembly (8) that are not lubricated, in use, by said lubrication system (10);
said electronic control unit (24) being configured to determine the presence or the probable presence of an anomaly of said transmission assembly (8) and/or provide for corrective actions when neither the first control criterion nor the second control criterion is satisfied and when said second quantity (ai) that does not satisfy the related first or second control criterion has been detected, in use, by said second device (23) configured to cooperate with one or more components of said transmission assembly (8) that are lubricated, in use, by said lubrication system (10).

4. The detection system according to any one of the preceding claims, wherein said electronic control unit (24) is configured to process said first quantity (n) and/or said second quantity (ai) to classify said first quantity (n) and/or said second quantity (ai) in one or more classes; said one or more classes comprising at least:
- a first class, which is indicative of the presence or probable presence of an anomaly of said transmission assembly (8); and
- a second class, which is indicative of the absence or improbable presence of an anomaly of said transmission assembly (8);
said electronic control unit (24) being configured to determine the presence or the probable presence of an anomaly of said transmission assembly (8) and/or provide for corrective actions when neither the first control criterion nor the second control criterion is satisfied and based on the classification of said first quantity (n) and/or said second quantity (ai) in the one or more classes.

5. The detection system according to claim 4, wherein said electronic control unit (24) is configured to classify said first quantity (n) and/or said second quantity (ai) in said one or more classes applying at least one predetermined classification model to said first quantity (n) and/or to said second quantity (ai); said at least one predetermined classification model being determined and applied by a machine learning algorithm.

6. The detection system according to any one of the preceding claims, comprising:
- at least one third device (21) configured to capture at least some of said particles present, in use, in said lubricating fluid along said fluid line (13) and generate a signal relating to the presence of said particles in said lubricating fluid;
- signalling means (17) configured to emit a signal relating to the presence of anomalies of said transmission assembly (8) and/or an emergency signal;
said electronic control unit (24) being operatively connected to said third device (21) and to said signalling means (17); said electronic control unit (24) being configured to:
- receive said signal relating to the presence of said particles in said lubricating fluid by said third device (21); and
- command said signalling means (17) accordingly to emit said signal relating to the presence of anomalies of said transmission assembly (8) and/or an emergency signal.

7. The detection system according to claim 6, wherein said third device (21) is configured to capture said particles of ferromagnetic material and generate said signal relating to the presence of said particles in said lubricating fluid when:
- the particles captured, in use, have sizes smaller than a size threshold value and their quantity is greater than a critical value;
- the particles captured, in use, have sizes greater than said size threshold value.

8. The detection system according to claim 6 or 7, when dependent on claim 5, wherein said electronic control unit (24) is configured to associate with said first quantity (n) and/or with said second quantity (ai) a time interval within which it is probable that said third device (21) will generate, in use, said signal relating to the presence of said particles in said lubricating fluid along said fluid line (13) ;
said electronic control unit (24) being configured to classify said first quantity (n) and/or said second quantity (ai) in said one or more classes by means of said classification model as a function of said time interval.

9. The detection system according to any one of the preceding claims, wherein said first device (22) is configured to detect said first quantity (n) associated with diamagnetic, paramagnetic or ferromagnetic particles transported, in use, by said lubricating fluid along said fluid line (13).

10. An aircraft (1) capable of hovering comprising:
- means for generating mechanical energy (2);
- a transmission assembly (8) operatively connected to said means for generating mechanical energy (2) and configured to transmit said mechanical energy to one or more components of said aircraft (1);
- a lubrication system (10) configured to lubricate said transmission assembly (8);
**characterized in that** it comprises a detection system (20) according to any one of the preceding claims.

11. The aircraft according to claim 10 when dependent on claim 6, wherein said lubrication system (10) comprises:
- a tank (11) adapted to contain, in use, a lubricating fluid;
- at least one nozzle (12) configured to supply said lubricating fluid to a portion of said transmission assembly (8); and
- a fluid line (13), which fluidly connects said tank (11) to said nozzle (12);
wherein said first device (22) and said third device (21) are arranged at said fluid line (13); said first device (22) being arranged downstream of said third device (21) considering the direction of flow of said lubricating fluid along said fluid line (13).

12. A method for detecting anomalies of a transmission assembly (8) of an aircraft (1) capable of hovering; said aircraft (1) comprising a lubrication system (10), in turn comprising:
- a tank (11) adapted to contain, in use, a lubricating fluid;
- at least one nozzle (12) configured to supply said lubricating fluid to a portion of said transmission assembly (8); and
- a fluid line (13), which fluidly connects said tank (11) to said nozzle (12);
said method being **characterized in that** it comprises the steps of:
i) detecting a first quantity (n) associated with particles transported by said lubricating fluid along said fluid line (13) by means of at least one first device (22);
ii) detecting a second quantity (ai) associated with vibrations of said transmission assembly (8) by means of at least one second device (23);
iii) verifying whether one between said first quantity (n) and said second quantity (ai) satisfies a first control criterion;
iv) verifying whether the other between said first quantity (n) and said second quantity (ai) satisfies a second control criterion when the first control criterion is not satisfied;
v) determining the presence or the probable presence of an anomaly of said transmission assembly (8) and/or providing for corrective actions when neither the first criterion nor the second control criterion is satisfied.

13. The method according to claim 12, wherein during said step iii) one between said first quantity (n) and said second quantity (ai) is compared with a first threshold value (ne; aei)
said method comprising the step vi) of changing said first threshold value (n_{θ}; a_{θi}) when said first control criterion is not satisfied and said second control criterion is satisfied; and/or
wherein during said step iv), the other between said first quantity (n) and said second quantity (ai) is compared with a second threshold value (aei; n_{θ})
said method comprising the step vii) of changing said second threshold value (a_{θi}; n_{θ}) when said second control criterion is not satisfied and said first control criterion is satisfied.

14. The method according to claim 12 or 13, wherein said step v) comprises determining the presence or the probable presence of an anomaly of said transmission assembly (8) and/or providing for corrective actions when neither the first control criterion nor the second control criterion is satisfied and when said second quantity (ai) that does not satisfy the related first or second control criterion has been detected by one said second device (23) that cooperates with one or more components of said transmission assembly (8) that are lubricated by said lubrication system (10).

15. The method according to any one of claims 12 to 14, comprising the further step viii) of processing said first quantity (n) and/or said second quantity (ai) to classify said first quantity (n) and/or said second quantity (ai) in one or more classes; said one or more classes comprising at least:
- a first class, which is indicative of the presence or probable presence of an anomaly of said transmission assembly (8); and
- a second class, which is indicative of the absence or improbable presence of an anomaly of said transmission assembly (8);
wherein said step v) comprises determining the presence or the probable presence of an anomaly of said transmission assembly (8) and/or providing for corrective actions when neither the first control criterion nor the second control criterion is satisfied and based on the classification in the one or more classes of said first quantity (n) and/or said second quantity (ai) ;
wherein said step viii) comprises applying at least one predetermined classification model to said first quantity (n) and/or to said second quantity (ai); said at least one predetermined classification model being determined and applied by a machine learning algorithm.

16. The method according to any one of claims 12 to 15, comprising the further step ix) of detecting the presence of said particles in said lubricating fluid along said fluid line (13) by means of a third device (21) and generating a corresponding emergency signal.

17. The method according to claims 15 and 16, wherein said step viii) comprises:
- associating with said first quantity (n) and/or with said second quantity (ai) a time interval within which it is probable that said third device (21) will generate said signal relating to the presence of said particles in said lubricating fluid along said fluid line (13);
- classifying said first quantity (n) and/or said second quantity (ai) in said one or more classes as a function of said time interval.
